# EUROPEAN PATENT APPLICATION

(11) **EP 4 546 515 A1**
(43) Date of publication of application: **30.04.2025**
(21) Application number: 22962295.6
(22) Date of filing: 17.10.2022
(51) Int. Cl.: H01M 50/103

(54) **BATTERY CELL, BATTERY, AND ELECTRICAL DEVICE**

(71) Applicant: Contemporary Amperex Technology (Hong Kong) Limited, Hong Kong (HK)
(72) Inventor: WANG, Liqin, Ningde, Fujian 352100 (CN); LI, Quankun, Ningde, Fujian 352100 (CN); MA, Yunjian, Ningde, Fujian 352100 (CN); YU, Honggang, Ningde, Fujian 352100 (CN); ZHAO, Peijie, Ningde, Fujian 352100 (CN); DING, Yu, Ningde, Fujian 352100 (CN)
(74) Representative: Behr, Wolfgang
(86) International application number: PCT/CN2022/125691
(87) International publication number: WO 2024/082097

(57) **Abstract**

Embodiments of this application provide a battery cell (20), a battery (10), and an electric device. The battery cell (20) includes: a shell (211), where the shell (211) is a hollow structure with an opening (2111), and an electrode terminal (214) is provided on a first side wall (2112) of the shell (211) adjacent to the opening (2111); and a cover plate (212) configured to cover the opening (2111), where the cover plate (212) and the shell (211) are sealingly connected to form a connecting structure (216) surrounding the opening (2111), the connecting structure (216) includes a first region (2161) corresponding to the electrode terminal (214), and an orthographic projection of a portion of the electrode terminal (214) protruding from the outer surface of the first side wall (2112) on the connecting structure (216) does not exceed the first region (2161). The battery cell (20), battery (10), and electric device provided in the embodiments of this application can improve the processing efficiency of the battery cell (20).

## Description

### TECHNICAL FIELD

This application relates to the technical field of batteries, and in particular, to a battery cell, a battery, and an electric device.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. In the rapid development of battery technologies, how the processing and production efficiency of batteries is improved is an urgent technical problem that needs to be solved in battery technologies.

### SUMMARY

Embodiments of this application provide a battery cell, a battery, and an electric device so as to improve the processing efficiency of the battery cell.

According to a first aspect, a battery cell is provided, including: a shell, where the shell is a hollow structure with an opening, and an electrode terminal is provided on a first side wall of the shell adjacent to the opening; and a cover plate configured to cover the opening, where the cover plate and the shell are sealingly connected to form a connecting structure surrounding the opening, the connecting structure includes a first region corresponding to the electrode terminal, and an orthographic projection of a portion of the electrode terminal protruding from the outer surface of the first side wall on the connecting structure does not exceed the first region.

Therefore, in this embodiment of this application, when the shell and the cover plate of the battery cell are sealingly connected, for example, through welding, welding sealing can be performed along an edge of the first region far away from the inside of the battery cell, or along an edge of the first region far away from the electrode terminal. With a large range, the first region is not or hardly affected by the electrode terminal with a relatively small range and also unlikely to affect the electrode terminal. In this way, the sealing efficiency can be improved, the sealing reliability can be ensured, and the processing efficiency and safety performance of the battery cell can be improved.

In some embodiments, height of the first region protruding from the outer surface of the first side wall is greater than height of the electrode terminal protruding from the outer surface of the first side wall. In this way, when the shell and the cover plate of the battery cell are sealingly connected, for example, through welding, welding sealing can be performed along the edge of the first region far away from the inside of the battery cell. Because height of the first region is not equal to height of the electrode terminal, to be specific, the height of the first region is relatively large, there is a height difference between an outer edge of the connecting structure perpendicular to a height direction of the first region and a corresponding outer edge of the electrode terminal, and the sealing connection between the shell and the cover plate in this region is not or hardly affected by the electrode terminal with a relatively small height and also unlikely to affect the electrode terminal. In this way, the sealing efficiency can be improved, the sealing reliability can be ensured, and the processing efficiency and safety performance of the battery cell can be improved.

In some embodiments, a difference between the height of the first region protruding from the outer surface of the first side wall and the height of the electrode terminal protruding from the outer surface of the first side wall falls in a range of [0.5 mm, 2 mm].

If the height difference is set too large, the height of the electrode terminal protruding from the outer surface of the first side wall is relatively fixed, so the height of the first region protruding from the outer surface of the first side wall is relatively large, which results in an excessively large local height of the battery cell, affecting the assembly of a plurality of battery cells inside the battery, and reducing the space utilization of the battery. On the contrary, if the height difference is set too small, to be specific, the height of the first region protruding from the outer surface of the first side wall is approximate to the height of the electrode terminal protruding from the outer surface of the first side wall, even if the shell and the cover plate are sealingly connected at an edge of the first region far away from the inside of the battery cell, the sealing connection is still easily affected by the electrode terminal, which in turn affects the sealing reliability and thus affects the processing efficiency of the battery cell.

In some embodiments, in a length direction of the first region, length of the first region is greater than length of the electrode terminal, where the length direction is perpendicular to both a thickness direction of the first region and a height direction of the first region protruding from the outer surface of the first side wall.

When the shell and the cover plate of the battery cell are sealingly connected, for example, through welding, welding sealing can be performed along the edge of the first region far away from the inside of the battery cell. Because the length of the first region is not equal to the length of the electrode terminal, to be specific, the length of the first region is relatively large, there is a length difference between an outer edge of the connecting structure perpendicular to the length direction of the first region and a corresponding outer edge of the electrode terminal, and the sealing connection between the shell and the cover plate in this region is not or hardly affected by the electrode terminal with a relatively small height and also unlikely to affect the electrode terminal. In this way, the sealing efficiency can be improved, the sealing reliability can be ensured, and the processing efficiency and safety performance of the battery cell can be improved.

In some embodiments, in the length direction of the first region, a minimum distance between an edge of the first region and the orthographic projection falls in a range of [0.5 mm, 5 mm].

If the distance is set too large, the length of the first region is too large because the length of the electrode terminal is relatively fixed, which causes the protruding first region to occupy a large space, thereby probably affecting the assembly of a plurality of battery cells inside the battery and reducing the space utilization of the battery. On the contrary, if the distance is set too small, a distance between the edge of the electrode terminal and the edge of the first region is relatively small, so even if the shell and the cover plate are sealingly connected at the outer edge of the first region far away from the electrode terminal, the sealing connection is still easily affected by the electrode terminal, which in turn affects the sealing reliability and thus affects the processing efficiency of the battery cell.

In some embodiments, a plurality of electrode terminals are arranged on the first side wall, and the connecting structure includes a plurality of first regions in a one-to-one correspondence with the plurality of electrode terminals. Arrangement of the plurality of electrode terminals in one-to-one correspondence with the plurality of first regions can avoid the influence of each electrode terminal on the sealing connection between the shell and the cover plate. Moreover, there is no need to distinguish which electrode terminals are provided with corresponding first regions and which electrode terminals are not provided with corresponding first regions, so the processing efficiency and the assembly efficiency of the battery cells can be improved.

In some embodiments, the connecting structure includes a second region corresponding to the first side wall, where height of the second region protruding from the outer surface of the first side wall is greater than the height of the electrode terminal protruding from the outer surface of the first side wall, and the second region includes the first region.

In this way, when the shell and the cover plate of the battery cell are sealingly connected, for example, through welding, in the region corresponding to the first side wall, the shell and cover plate can be welded and sealed along an outer edge of the second region far away from the inside of the battery cell. With a large height, the second region is not or hardly affected by the electrode terminal with a relatively small height and also unlikely to affect the electrode terminal. In this way, the sealing efficiency can be improved, the sealing reliability can be ensured, and the processing efficiency and safety performance of the battery cell can be improved.

In some embodiments, the electrode terminal is a positive electrode terminal. Considering that height of a positive electrode terminal is typically greater than height of a negative electrode terminal, to be specific, a portion of the positive electrode terminal protruding from the outer surface of the first side wall is likely to affect the sealing connection between the shell and the cover plate, arranging the positive electrode terminal to correspond to the first region instead of arranging the first region to correspond to the negative electrode terminal can also effectively avoid the influence of the positive electrode terminal on the sealing connection between the shell and the cover plate.

In some embodiments, the shell has a plurality of first side walls such that the electrode terminals arranged on each first side wall have corresponding first regions, so as to improve the sealing reliability between the shell and the cover plate.

In some embodiments, the shell includes a second side wall adjacent to the opening, where no electrode terminal is provided on the second side wall; and the connecting structure includes a third region corresponding to the second side wall, where height of the third region protruding from the outer surface of the second side wall is not equal to height of the first region protruding from the outer surface of the first side wall.

In the arrangement of the third region, there is no need to consider the influence of electrode terminals. For example, if the third region does not need to avoid other components, the height of the third region protruding from the outer surface of the second side wall can be reduced to reduce the space occupied by the third region. On the contrary, if the third region needs to avoid other components, the height of the third region protruding from the outer surface of the second side wall can be appropriately increased or reduced so as to avoid the influence of other components on the connecting structure, thereby improving the sealing reliability between the shell and the cover plate.

In some embodiments, the height of the third region protruding from the outer surface of the second side wall is less than the height of the first region protruding from the outer surface of the first side wall. Considering that except the electrode terminals, no other components with a larger height or components that have an influence on the sealing connection between the shell and the cover plate are provided on a side wall of the shell, height of the side wall of the shell with no electrode terminal can be set to be relatively small.

In some embodiments, the battery cell further includes an insulation structure, where the insulation structure is arranged on a side of the first side wall facing the inside of the battery cell, the first side wall is provided with a first through hole, the insulation structure is provided with a second through hole corresponding to the first through hole, and the electrode terminal runs through the first through hole and the second through hole, such that the first side wall and the insulation structure are riveted. This facilitates processing and fastening among the electrode terminal, the first side wall, and the insulation structure.

In some embodiments, the battery cell further includes a sealing structure arranged on a side of the first side wall far away from the inside of the battery cell, and the sealing structure is configured to electrically isolate the electrode terminal from the first side wall. The sealing structure is typically made of an insulating material, and the sealing structure is arranged between the first side wall and the electrode terminal, such that short circuit between the electrode terminal and the first side wall can be avoided.

In some embodiments, the sealing structure is provided with a fifth through hole, where the fifth through hole is at least partially accommodated in the first through hole, and the electrode terminal runs through the fifth through hole, such that the electrode terminal and the first through hole are sealed.

As the first side wall is provided with the first through hole and the insulation structure is provided with the second through hole, there may be gaps between the electrode terminal and the first through hole and between the electrode terminal and the second through hole, so the first through hole and the second through hole can be sealed by the sealing structure. For example, during riveting and extrusion, the sealing structure can be extruded to deform and then sealed, so as to avoid internal electrolyte leakage.

In some embodiments, a first limiting structure is provided on the first side wall, and the insulation structure is provided with a second limiting structure corresponding to the first limiting structure, where the second limiting structure and the first limiting structure cooperate with each other to prevent relative movement between the insulation structure and the first side wall.

This can position the first side wall and the insulation structure so as to facilitate the installation thereof. In addition, this can also avoid misalignment between the first side wall and the insulation structure, for example, it can avoid relative translation between the first side wall and the insulation structure, thereby ensuring the insulation performance of the insulation structure between the first side wall and other components inside the battery cell, avoiding short circuit, and improving the safety performance of the battery cell.

In some embodiments, the battery cell further includes a connecting member configured to be electrically connected to the electrode terminal, where the connecting member is arranged on a side of the insulation structure facing the inside of the battery cell, and is provided with a third through hole corresponding to the second through hole, and the electrode terminal runs through the third through hole, such that the connecting member, the insulation structure, and the first side wall are riveted.

The connecting member is provided with a third through hole, and the first through hole of the first side wall, the second through hole of the insulation structure, and the third through hole of the connecting member are stacked in sequence, such that the electrode terminal can run through the first through hole, the second through hole, and the third through hole in sequence, thereby realizing riveting fixation between the first side wall, the insulation structure, and the connecting member, with a simple processing process, which helps improve the processing efficiency of the battery cells.

In some embodiments, the connecting member further includes a third limiting structure, where the third limiting structure and the second limiting structure cooperate with each other to prevent relative movement between the connecting member and the insulation structure.

The first limiting structure, the second limiting structure, and the third limiting structure can cooperate with each other to prevent relative movement between the first side wall, the insulation structure, and the connecting member, the connecting member can be fixed to facilitate the assembly of the battery cells, and it can also ensure that the insulation structure electrically isolates the first side wall from the connecting member, so as to avoid short circuit between the connecting member and the first side wall.

In some embodiments, the cover plate is a wall with a largest area of the battery cell, which facilitates the installation of components inside the battery cell, for example, can facilitate the installation of electrode assemblies and accelerate the processing of the battery cell.

In some embodiments, a pressure relief mechanism is provided on the cover plate; or a pressure relief mechanism is provided on a wall opposite the cover plate so as to be actuated to release pressure or temperature inside the battery cell when the pressure or temperature inside the battery cell reaches a preset threshold.

In some embodiments, the pressure relief mechanism is an L-shaped indentation provided on the outer surface of the battery cell, to be specific, the pressure relief mechanism has two parts connected and perpendicular to each other. In this way, when the temperature or pressure inside the battery cell reaches a preset threshold, the pressure relief mechanism can be destroyed in any direction, such that the pressure relief mechanism is destroyed in a timely manner and the pressure and temperature inside the battery cell can be released in time to prevent the battery cell from exploding. In addition, the pressure relief mechanism is arranged on the outer surface of the cover plate, so as to prevent the electrolyte in the battery cell from accumulating in the indentation and avoid the corrosion of the electrolyte to the pressure relief mechanism, thereby improving the safety of the pressure relief mechanism.

In some embodiments, the shell is made of stainless steel and/or alloy; and/or the cover plate is made of stainless steel and/or alloy. This can make the battery cell have high hardness and ensure the structural strength of the battery cell.

In some embodiments, thickness of the shell falls in a range of [50 µm, 200 µm]; and/or thickness of the cover plate falls in a range of [50 µm, 200 µm], so as to ensure the structural strength of the battery cell.

According to a second aspect, a battery is provided, including a plurality of battery cells according to the first aspect.

According to a third aspect, an electric device is provided, including the battery cell according to the first aspect, where the battery cell is configured to supply electrical energy to the electric device.

In some embodiments, the electric device is a vehicle, a ship, or a spacecraft.

### BRIEF DESCRIPTION OF DRAWINGS

FIG. 1 is a schematic structural diagram of a vehicle disclosed in an embodiment of this application;
FIG. 2 is a schematic structural exploded view of a battery disclosed in an embodiment of this application;
FIG. 3 is a schematic structural diagram of a battery cell disclosed in an embodiment of this application;
FIG. 4 is a schematic structural exploded view of a battery cell disclosed in an embodiment of this application;
FIG. 5 is a schematic partial side view of a battery cell disclosed in an embodiment of this application;
FIG. 6 is a schematic structural diagram of another battery cell disclosed in an embodiment of this application;
FIG. 7 is a schematic structural diagram of still another battery cell disclosed in an embodiment of this application;
FIG. 8 is a schematic structural side view of still another battery cell disclosed in an embodiment of this application;
FIG. 9 is a schematic structural diagram of a battery cell before cutting disclosed in an embodiment of this application;
FIG. 10 is a schematic partial cross-sectional view of a battery cell disclosed in an embodiment of this application;
FIG. 11 is another schematic partial cross-sectional view of a battery cell disclosed in an embodiment of this application;
FIG. 12 is a schematic partial cross-sectional exploded view of a battery cell disclosed in an embodiment of this application;
FIG. 13 is a schematic diagram of the outer surface of a first wall of a battery cell disclosed in an embodiment of this application;
FIG. 14 is a schematic diagram of a surface of a cover plate disclosed in an embodiment of this application; and
FIG. 15 is a schematic partial cross-sectional view of a cover plate disclosed in an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of this application. In the description of this application, it should also be noted that unless otherwise specified and defined explicitly, the terms "mounting", "connection", and "joining" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of the battery cell is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of polypropylene (polypropylene, PP), polyethylene (polyethylene, PE), or the like. In addition, the electrode assembly may be a wound structure or a stacked structure. However, the embodiments of this application are not limited thereto.

For the development of battery technologies, many design factors need to be considered, for example, performance parameters such as energy density, cycle life, discharge capacity, and charge and discharge rate, as well as safety and processing efficiency of the battery. A battery cell typically includes a shell with an opening and a cover plate for covering the opening, where the shell and the cover plate can be sealingly connected through welding. The sealing connection region between the shell and the cover plate of the battery cell usually protrudes from the outer surfaces of the cover plate and the shell, with a relatively small height of the protruding portion. In addition, the electrode terminals and other components arranged on the battery cell may also protrude from the surface of the shell or the cover plate, which is likely to affect the protruding electrode terminals or other components during welding of the shell and the cover plate. For example, laser welding for sealing the shell and the cover plate may interfere with the electrode terminals, which affects the operability of laser welding and the yield, thereby increasing the manufacturing cost, even affecting the sealing performance of the battery cell, and thereby affecting the qualification rate and processing efficiency of the battery cell.

Therefore, the embodiments of this application provide a battery cell, a battery, and an electric device, where a shell and a cover plate of the battery cell are sealingly connected to form a connecting structure surrounding an opening of the shell. The connecting structure includes a first region corresponding to the electrode terminal located on the first side wall of the shell, and an orthographic projection of a portion of the electrode terminal protruding from the outer surface of the first side wall on the connecting structure does not exceed the first region, to be specific, the range of the first region is greater than or equal to the range of the orthographic projection. In this way, when the shell and cover plate of the battery cell are sealingly connected, for example, through welding, the shell and the cover plate can be welded and sealed along an edge of the first region far away from the inside of the battery cell. With a large range, the first region is not or hardly affected by the electrode terminal with a relatively small range and also unlikely to affect the electrode terminal. In this way, the sealing efficiency can be improved, the sealing reliability can be ensured, and the processing efficiency and safety performance of the battery cell can be improved.

For ease of description, the electric device being a vehicle is used as example for description of the following embodiments.

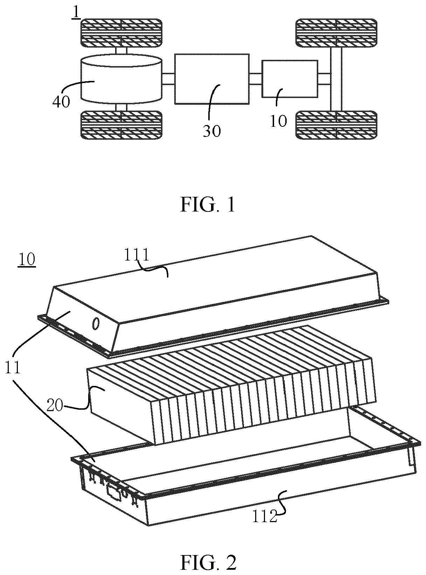

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. For example, the plurality of battery cells may be connected in series, parallel, or series-parallel to form a battery module first, and then the plurality of battery modules are connected in series, parallel, or series-parallel to form a battery. In a word, the plurality of battery cells may be directly combined into a battery, or may first be combined into battery modules that are then combined into a battery.

For example, FIG. 2 is a schematic structural diagram of a battery 10 according to an embodiment of this application. The battery 10 may include a plurality of battery cells 20. The battery 10 may further include a box 11, an inside of the box 11 is a hollow structure, and the plurality of battery cells 20 are accommodated in the box 11. FIG. 2 shows a possible implementation of the box 11 in this embodiment of this application. As shown in FIG. 2, the box 11 may include two portions that are referred as a first portion 111 and a second portion 112 respectively, and the first portion 111 and the second portion 112 are snap-fitted. Shapes of the first portion 111 and the second portion 112 may be determined based on a shape of the plurality of battery cells 20 that are combined. At least one of the first portion 111 and the second portion 112 is provided with an opening. For example, as shown in FIG. 2, the first portion 111 and the second portion 112 each may be a hollow cuboid and have only one face with an opening, where the opening of the first portion 111 and the opening of the second portion 112 are opposite each other, and the first portion 111 and the second portion 112 are snap-fitted to form a box 11 having an enclosed chamber.

For another example, unlike FIG. 2, it is possible that only one of the first portion 111 and the second portion 112 is a hollow cuboid with an opening, and the other may be a plate for covering the opening. For example, an example is used where the second portion 112 is a hollow cuboid and has only one face with an opening and the first portion 111 is a plate. Therefore, the first portion 111 covers the opening of the second portion 112 to form a box 11 with an enclosed chamber. The chamber may be configured for accommodating the plurality of battery cells 20. The plurality of battery cells 20 are connected in parallel, series, or series-parallel, and then put into the box 11 formed after the first portion 111 and the second portion 112 are snap-fitted.

In some embodiments, the battery 10 may further include other structures. Details are not described herein. For example, the battery 10 may further include a busbar, where the busbar is configured to implement an electrical connection between a plurality of battery cells 20, for example, a parallel connection, a series connection, or a series-parallel connection. Specifically, the busbar may implement the electrical connection between the battery cells 20 by connecting electrode terminals of the battery cells 20. Further, the busbar may be fixed to the electrode terminal of the battery cell 20 by welding. Electrical energy of the plurality of battery cells 20 may be further led out through a conductive mechanism that passes through the box 11.

Depending on different power needs, the battery cells 20 in the battery 10 may be provided in any quantity. The plurality of battery cells 20 may be connected in series, parallel, or series-parallel to achieve greater capacity or power. Because each battery 10 may include a large number of battery cells 20, for ease of installation, the battery cells 20 may be arranged in groups, and each group of battery cells 20 form a battery module. The number of battery cells 20 included in the battery module is not limited, and may be set according to requirements. In addition, to increase the space occupancy rate of the battery cells 20 in the battery 10, installation directions of the battery cells 20 can be reasonably arranged according to the shapes of the plurality of battery cells 20. Moreover, the installation directions of different battery cells 20 in the battery 10 may be the same or different, which is not limited in the embodiments of this application.

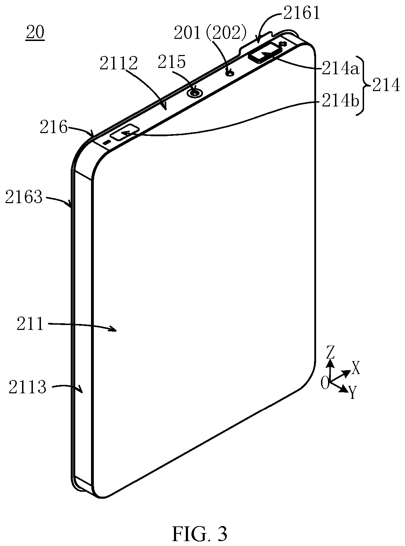

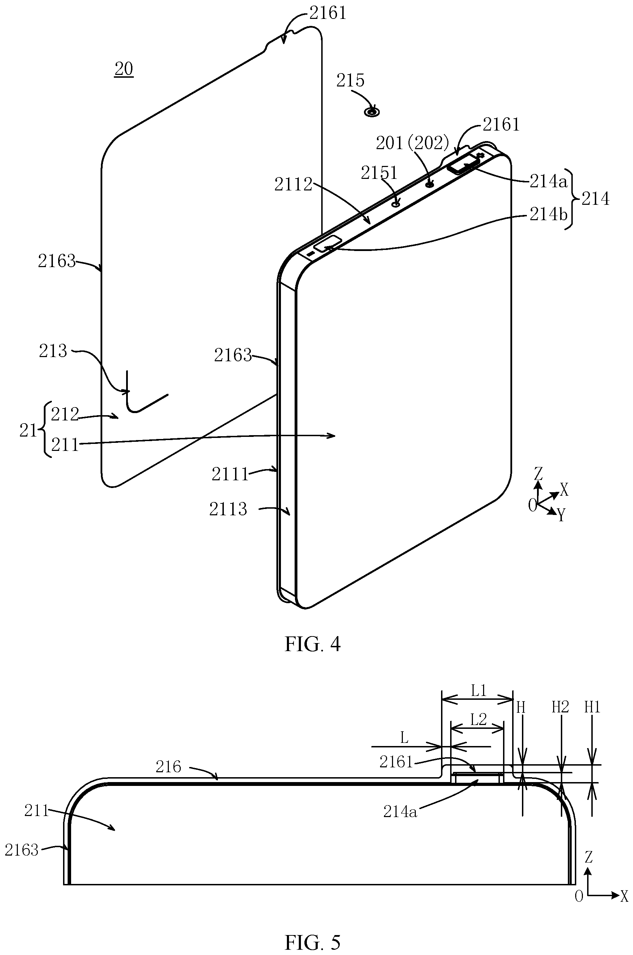

FIG. 3 is a schematic structural diagram of the battery cell 20 according to an embodiment of this application; FIG. 4 is a schematic structural exploded view of the battery cell 20 according to an embodiment of this application, for example, FIG. 4 may be a schematic structural exploded view of the battery cell 20 shown in FIG. 3; and FIG. 5 is a schematic partial side view of the battery cell 20 according to an embodiment of this application, for example, FIG. 5 is a schematic partial diagram of one side of the bottom wall of the shell 211 of the battery cell 20 shown in FIG. 3.

As shown in FIG. 3 to FIG. 5, the battery cell 20 includes: a shell 211, where the shell 211 is a hollow structure with an opening 2111, and an electrode terminal 214 is provided on a first side wall 2112 of the shell 211 adjacent to the opening 2111; and a cover plate 212, configured to cover the opening 2111, where the cover plate 212 and the shell 211 are sealingly connected to form a connecting structure 216 surrounding the opening 2111, the connecting structure 216 includes a first region 2161 corresponding to the electrode terminal 214, and an orthographic projection of a portion of the electrode terminal 214 protruding from the outer surface of the first side wall 2112 on the connecting structure 216 does not exceed the first region 2161.

It should be understood that the battery cell 20 of this embodiment of this application includes a housing 21, where the housing 21 can be a polyhedral hollow structure, and the hollow structure can be used to accommodate the electrode assembly. The shape of the battery cell 20 can be flexibly designed according to the actual application, to be specific, the battery cell 20 can be any polyhedral structure. For example, it can be designed as a cuboid or a cylinder. Specifically, the battery cell 20 may include a housing 21, where the housing 21 includes a plurality of walls, such that the battery cell 20 is a polyhedral structure. For example, as shown in FIG. 3 to FIG. 5, the housing being a cuboid structure is used as an example for description in this embodiment of this application. For the rectangular battery cell 20, the housing 21 may include six walls.

Specifically, for the rectangular battery cell 20, for ease of description, three reference directions are defined in this embodiment of this application. As shown in FIG. 3 to FIG. 5, a thickness direction of the battery cell 20 is direction Y, a height direction of the battery cell 20 is direction Z, and a width direction of the battery cell 20 is direction X, where the thickness direction Y, the height direction Z, and the width direction X of the battery cell 20 are perpendicular to each other.

The housing 21 of this embodiment of this application may include a shell 211 and a cover plate 212. The shell 211 may be a hollow structure with an opening 2111 formed at one or more ends. For example, if the shell 211 is a hollow structure with an opening 2111 formed at one end, the cover plate 212 may be provided in one. If the shell 211 is a hollow structure with openings 2111 formed at two opposite ends, the cover plate 212 may be provided in two, where the two cover plates 212 cover the openings at two ends of the shell 211 respectively.

For ease of description, as shown in FIG. 3 to FIG. 5, the shell 211 having one opening 2111 is used as an example in this embodiment of this application, and correspondingly, the cover plate 212 is configured to cover the opening 2111. Optionally, the cover plate 212 of this embodiment of this application covers the opening 2111 of the shell 211. For example, the shell 211 and the cover plate 212 can be sealingly connected through welding, so as to improve the sealing reliability.

The shell 211 and the cover plate 212 of this embodiment of this application are sealingly connected, meaning that the shell 211 and the cover plate 212 are sealingly connected surrounding the opening 2111 to form the connecting structure 216 surrounding the opening 2111. Specifically, the connecting structure 216 includes an edge region of the shell 211 surrounding the opening 2111 and an outer edge region of the cover plate 211 that corresponds to the edge region. Moreover, the edge region of the shell 211 is in contact with the edge region of the cover plate 212 to implement sealing connection in at least part of these regions, so as to form the connecting structure 216 protruding from an outer surface of the cover plate 212 and an outer surface of the shell 211, where the outer surface of the shell 211 and the outer surface of the cover plate 212 both represent surfaces far away from the inside of the battery cell 20. For example, the outer surface of the first side wall 2112 of the shell 211 is a surface of the first side wall 2112 far away from the inside of the battery cell 20.

It should be understood that the connecting structure 216 of this embodiment of this application includes a portion where the shell 211 is in contact with the cover plate 212, but it is not limited to the actual sealing region. For example, when the shell 211 and the cover plate 212 are sealed through welding, the actual welding region may be smaller than or equal to the region corresponding to the connecting structure 216, meaning that welding can be performed in at least part of the connecting structure 216.

The first side wall 2112 of the shell 211 is provided with an electrode terminal 214, and the first region 2161 of the connecting structure 216 is a region corresponding to the electrode terminal 214, to be specific, the first region 2161 is a region close to and surrounding the electrode terminal 214.

In this embodiment of this application, the orthographic projection of the portion of the electrode terminal 214 protruding from the first side wall 2112 on the connecting structure 216 is a projection of a portion of the electrode terminal 214 protruding from the first side wall 2112 along a thickness direction of the connecting structure 216, or a projection along a direction perpendicular to a surface of the connecting structure 216. For example, as shown in FIG. 3 to FIG. 5, if the thickness direction of the connecting structure 216 is consistent with the thickness direction Y of the battery cell 20, the orthographic projection of the portion of the electrode terminal 214 protruding from the first side wall 2112 on the connecting structure 216 is perpendicular to the thickness direction Y of the battery cell 20.

In this embodiment of this application, the orthographic projection does not exceed the first region, which means that a range of the orthographic projection is less than or equal to a range of the first region. In this way, when the shell 211 and the cover plate 212 of the battery cell 20 are sealingly connected, for example, through welding, welding sealing can be performed along an edge of the first region 2161 far away from the inside of the battery cell 20, or along an edge of the first region 2161 far away from the electrode terminal 214. With a large range, the first region 2161 is not or hardly affected by the electrode terminal 214 with a relatively small range and also unlikely to affect the electrode terminal 214. In this way, the sealing efficiency can be improved, the sealing reliability can be ensured, and the processing efficiency and safety performance of the battery cell 20 can be improved.

Optionally, in this embodiment of this application, that the orthographic projection of the portion of the electrode terminal 214 protruding from the outer surface of the first side wall 2112 on the connecting structure 216 does not exceed the first region 2161 may include various cases. For example, height H1 of the first region 2161 protruding from the outer surface of the first side wall 2112 is greater than height H2 of the electrode terminal 214 protruding from the outer surface of the first side wall 2112. In this way, when the shell 211 and the cover plate 212 of the battery cell 20 are sealingly connected, for example, through welding, welding sealing can be performed along the edge of the first region 2161 far away from the inside of the battery cell 20. Because the height H1 of the first region 2161 is not equal to the height H2 of the electrode terminal 214, to be specific, the height H1 of the first region 2161 is relatively large, there is a height difference between an outer edge of the connecting structure 216 perpendicular to a height direction of the first region 2161 and a corresponding outer edge of the electrode terminal 214, and the sealing connection between the shell 211 and the cover plate 212 in this region is not or hardly affected by the electrode terminal 214 with a relatively small height and also unlikely to affect the electrode terminal 214. In this way, the sealing efficiency can be improved, the sealing reliability can be ensured, and the processing efficiency and safety performance of the battery cell 20 can be improved.

It should be understood that the height H1 of the first region 2161 in this embodiment of this application may be a minimum height of different regions of the first region 2161 along the height direction of the first region 2161. The height direction of the first region 2161 is perpendicular to the first side wall 2112, to be specific, the height direction of the first region 2161 is a thickness direction of the first side wall 2112. For example, as shown in FIG. 3 to FIG. 5, if the first region 2161 is perpendicular to the first side wall and the thickness direction of the first side wall 2112 is the height direction Z of the battery cell 20, the height direction of the first region 2161 is the height direction Z of the battery cell 20. In addition, in the height direction of the first region 2161, heights of different regions of the first region 2161 can be set to be equal so as to facilitate processing.

In this embodiment of this application, a value of a difference H between the height H1 of the first region 2161 protruding from the outer surface of the first side wall 2112 and the height H2 of the electrode terminal 214 protruding from the outer surface of the first side wall 2112 can be flexibly set according to the actual application. For example, as shown in FIG. 3 to FIG. 5, if the height difference H is set too large, the height H2 of the electrode terminal 214 protruding from the outer surface of the first side wall 2112 is relatively fixed, so the height H1 of the first region 2161 protruding from the outer surface of the first side wall 2112 is relatively large, which results in an excessively large local height of the battery cell 20, affecting the assembly of a plurality of battery cells 20 inside the battery 10, and reducing the space utilization of the battery 10. On the contrary, if the height difference H is set too small, to be specific, the height H1 of the first region 2161 protruding from the outer surface of the first side wall 2112 is approximate to the height H2 of the electrode terminal 214 protruding from the outer surface of the first side wall 2112, even if the shell 211 and the cover plate 212 are sealingly connected at an edge of the first region 2161 far away from the inside of the battery cell 20, the sealing connection is still easily affected by the electrode terminal 214, which in turn affects the sealing reliability and thus affects the processing efficiency of the battery cell 20.

Therefore, the height difference should not be set too large or too small. For example, the value of the difference H between the height H1 of the first region 2161 protruding from the outer surface of the first side wall 2112 and the height H2 of the electrode terminal 214 protruding from the outer surface of the first side wall 2112 falls in a range of [0.5 mm, 2 mm]. For another example, the height difference H can be specifically set to 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, or 2 mm.

Optionally, in this embodiment of this application, the value of the height H1 of the first region 2161 protruding from the outer surface of the first side wall 2112 can be set according to the actual application. For example, the value of the height H1 of the first region 2161 protruding from the outer surface of the first side wall 2112 can generally be set to a range of [1 mm, 7 mm]. For another example, the height H1 of the first region 2161 protruding from the outer surface of the first side wall 2112 can be specifically set to 1 mm, 1.3 mm, 1.5 mm, 1.8 mm, 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, 5 mm, 5.3 mm, 5.5 mm, 5.8 mm, 6 mm, 6.3 mm, 6.5 mm, 6.8 mm, or 7 mm.

Optionally, in this embodiment of this application, the value of the height H2 of the electrode terminal 214 protruding from the outer surface of the first side wall 2112 can be set according to the actual application. For example, the value of the height H2 of the electrode terminal 214 protruding from the outer surface of the first side wall 2112 can generally be set to a range of [0.5 mm, 5 mm]. For another example, the height H2 of the electrode terminal 214 protruding from the outer surface of the first side wall 2112 can be specifically set to 0.5 mm, 0.8 mm, 1 mm, 1.3 mm, 1.5 mm, 1.8 mm, 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, or 5 mm.

Optionally, in the length direction of the first region 2161, length L1 of the first region 2161 is greater than length L2 of the electrode terminal 214, and the length direction is perpendicular to both a thickness direction of the first region 2161 and a height direction of the first region 2161 protruding from the outer surface of the first side wall 2112. In addition to the foregoing height direction, the length L1 of the first region 2161 can also be set to be greater than length L2 of the electrode terminal 214, to be specific, the length L1 of the first region 2161 is greater than length of a portion of the electrode terminal 214 protruding from the outer surface of the first side wall 2112 in the orthographic projection of the connecting structure 216. In this way, when the shell 211 and the cover plate 212 of the battery cell 20 are sealingly connected, for example, through welding, welding sealing can be performed along the edge of the first region 2161 far away from the inside of the battery cell 20. Because the length L1 of the first region 2161 is not equal to the length L2 of the electrode terminal 214, to be specific, the length L1 of the first region 2161 is relatively large, there is a length difference between an outer edge of the connecting structure 216 perpendicular to a length direction of the first region 2161 and a corresponding outer edge of the electrode terminal 214, and the sealing connection between the shell 211 and the cover plate 212 in this region is not or hardly affected by the electrode terminal 214 with a relatively small height and unlikely to affect the electrode terminal 214. In this way, the sealing efficiency can be improved, the sealing reliability can be ensured, and the processing efficiency and safety performance of the battery cell 20 can be improved.

It should be understood that the length direction of the first region 2161 is perpendicular to the thickness direction of the first region 2161 and also perpendicular to the height direction of the first region 2161 protruding from the outer surface of the first side wall 2112. For example, as shown in FIG. 3 to FIG. 5, if the connecting structure 216 is perpendicular to the first side wall 2112 of the shell 211, a thickness direction of the first region 2161 of the connecting structure 216 is the thickness direction Y of the battery cell 20, and a height direction of the first region 2161 is the height direction Z of the battery cell 20. Correspondingly, a length of the first region 2161 is the width direction X of the battery cell 20, but this embodiment of this application are not limited thereto.

In addition, the length L1 of the first region 2161 may be a minimum length of different regions of the first region 2161 along the length direction of the first region 2161. For example, as shown in FIG. 3 to FIG. 5, in the length direction of the first region 2161, lengths of different regions of the first region 2161 may be set to be equal, for example, the first region 2161 may be set to be rectangular so as to facilitate processing.

Optionally, in the length direction of the first region 2161, a value of a difference between the length L1 of the first region 2161 and the length L2 of the electrode terminal 214 can be set according to the actual application. Moreover, at both ends in the length direction of the first region 2161, length differences between the first region 2161 and the electrode terminal 214 may be equal or unequal. For example, taking one end as an example, that is, as shown in FIG. 3 to FIG. 5, in the length direction of the first region 2161, a value range of a minimum distance L between an edge of the first region 2161 and a corresponding orthographic projection can be set according to the actual application. If the distance L is set too large, the length L1 of the first region 2161 is too large because the length L2 of the electrode terminal 214 is relatively fixed, which causes the protruding first region 2161 to occupy a large space, thereby probably affecting the assembly of a plurality of battery cells 20 inside the battery 10 and reducing the space utilization of the battery 10. On the contrary, if the distance L is set too small, a distance between the edge of the electrode terminal 214 and the edge of the first region 2161 is relatively small, so even if the shell 211 and the cover plate 212 are sealingly connected at the outer edge of the first region 2161 far away from the electrode terminal 214, the sealing connection is still easily affected by the electrode terminal 214, which in turn affects the sealing reliability and thus affects the processing efficiency of the battery cell 20.

Therefore, the value of the distance L should not be too large or too small. For example, in the length direction of the first region 2161, a minimum distance L between an edge of the first region 2161 and the orthographic projection falls in a range of [0.5 mm, 5 mm]. For another example, the distance L can be specifically set to 0.5 mm, 0.8 mm, 1 mm, 1.3 mm, 1.5 mm, 1.8 mm, 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, or 5 mm.

Optionally, in the length direction of the first region 2161, the value of the length L1 of the first region 2161 can be set according to the actual application. For example, the length L1 of the first region 2161 can be set to a range of [2.5 mm, 25 mm]. For another example, the length L1 of the first region 2161 can be specifically set to 2.5 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, or 25 mm.

Optionally, in the length direction of the first region 2161, the value of the length L2 of the electrode terminal 214 can be set according to the actual application. For example, the length L2 of the electrode terminal 214 can be set to a range of [2 mm, 20 mm]. For another example, the length L2 of the electrode terminal 214 can be specifically set to 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, or 20 mm.

It should be understood that the first side wall 2112 in this embodiment of this application is provided with an electrode terminal 214, where the electrode terminal 214 can be any electrode terminal 214 included in the battery cell 20. Specifically, the electrode terminal 214 is configured to be electrically connected to the electrode assembly inside the battery cell 20 to output the electrical energy of the battery cell 20. As shown in FIG. 3 to FIG. 5, the battery cell 20 may include at least two electrode terminals 214, where the at least two electrode terminals 214 may include at least one positive electrode terminal 214a and at least one negative electrode terminal 214b, the positive electrode terminal 214a is configured to be electrically connected to a positive electrode tab of the electrode assembly, and the negative electrode terminal 214b is configured to be electrically connected to a negative electrode tab of the electrode assembly. The positive electrode terminal 214a and the positive electrode tab may be directly connected or indirectly connected, and the negative electrode terminal 214b and the negative electrode tab may be directly connected or indirectly connected. For example, the positive electrode terminal 214a is electrically connected to the positive electrode tab 222a via a connecting member 23. The negative electrode terminal 214b is electrically connected to the negative electrode tab 222b via a connecting member 23.

It should be understood that different electrode terminals 214 may be located on the same wall or different walls of the battery cell 20. For example, as shown in FIG. 3 to FIG. 5, in this embodiment of this application, the battery cell 20 including two electrode terminals 214 is used as an example, where the two electrode terminals 214 are located on the same wall, for example, they can both be located on the first side wall 2112. For another example, unlike what is shown in FIG. 3 to FIG. 5, the shell 211 has a plurality of first side walls 2112, where each of the plurality of first side walls 2112 is provided with at least one electrode terminal 214; and the connecting structure 216 has a plurality of first regions 2161, such that the electrode terminal 214 provided on each first side wall 2112 has at least one corresponding first region 2161. For ease of description, in this embodiment of this application, the battery cell 20 including one first side wall 2112 is used as an example. When the battery cell 20 includes a plurality of first side walls 2112, the relevant description is applicable to each first side wall 2112.

Optionally, the first side wall 2112 of the battery cell 20 of this embodiment of this application may include a plurality of electrode terminals 214, and the connecting structure 216 may include at least one first region 2161. For example, if the first side wall 2112 of the battery cell 20 includes a plurality of electrode terminals 214, some of the plurality of electrode terminals 214 may have corresponding first regions 2161. Specifically, as shown in FIG. 3 to FIG. 5, considering that the height of the positive electrode terminal 214a is generally greater than the height of the negative electrode terminal 214b, to be specific, the portion of the positive electrode terminal 214a protruding from the outer surface of the first side wall 2112 easily affects the sealing connection between the shell 211 and the cover plate 212, when the first side wall 2112 includes at least one positive electrode terminal 214a and at least one negative electrode terminal 214b, only the at least one positive electrode terminal 214a can be arranged in a one-to-one correspondence with the at least one first region 2161, and the first region 2161 may not be arranged to correspond to the negative electrode terminal 214b. In other words, the electrode terminal 214 in this embodiment of this application is a positive electrode terminal 214a, so as to avoid the influence of the positive electrode terminal 214a on the sealing connection between the shell 211 and the cover plate 212.

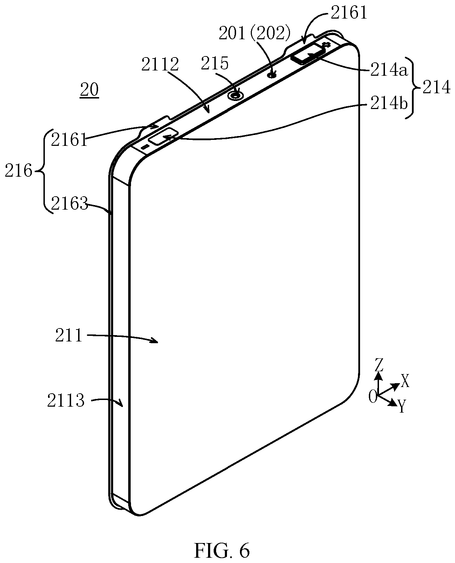

Optionally, in another embodiment, FIG. 6 is another schematic structural diagram of the battery cell 20 according to an embodiment of this application. As shown in FIG. 6, the first side wall 2112 is provided with a plurality of electrode terminals 214, and the connecting structure 216 includes a plurality of first regions 2161 in a one-to-one correspondence with the plurality of electrode terminals 214. Specifically, arrangement of the plurality of electrode terminals 214 in one-to-one correspondence with the plurality of first regions 2161 can avoid the influence of each electrode terminal 214 on the sealing connection between the shell and the cover plate 212. Moreover, there is no need to distinguish which electrode terminals 214 are provided with corresponding first regions 2161 and which electrode terminals 214 are not provided with corresponding first regions 2161, so the processing efficiency and the assembly efficiency of the battery cells 20 can be improved.

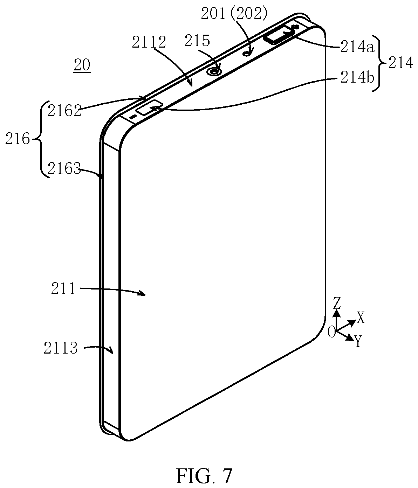

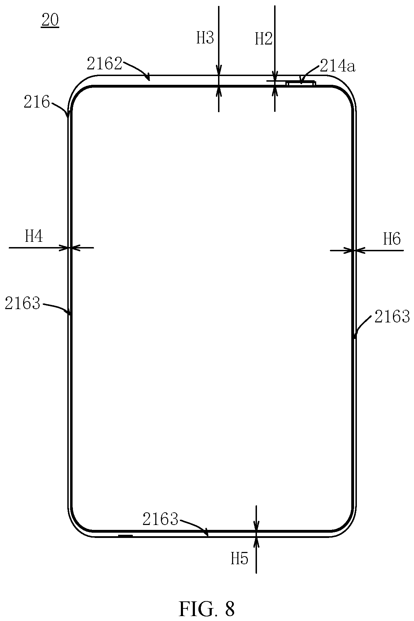

Optionally, in another embodiment, FIG. 7 is a schematic structural diagram of still another battery cell 20 according to an embodiment of this application; and FIG. 8 is a schematic side view of the battery cell 20 according to an embodiment of this application, for example, FIG. 8 may be a schematic diagram of a side of the shell 211 far away from the cover plate 211 of the battery cell 20 shown in FIG. 7. As shown in FIG. 7 and FIG. 8, the connecting structure 216 includes a second region 2162 corresponding to the first side wall 2112, where height H3 of the second region 2162 protruding from the outer surface of the first side wall 2112 is greater than height H2 of the electrode terminal 214 protruding from the outer surface of the first side wall 2112, and the second region 2162 includes the first region 2161. Specifically, the second region 2162 is a region corresponding to the first side wall 2112, to be specific, the second region 2162 is a region of the connecting structure 216 connected to the first side wall 2112. The height H3 of the second region 2162 protruding from the first side wall 2112 is set to be greater than the height H2 of the electrode terminal 214 protruding from the outer surface of the first side wall 2112, which means that there is no need to separately provide the locally protruding first region 2161, but to provide the second region 2162 corresponding to the first side wall 2112 that is higher than the height H2 of the electrode terminal 214, in other words, the second region 2162 includes the first regions 2161 mentioned above. In this way, when the shell 211 and cover plate 212 of the battery cell 20 are sealingly connected, for example, through welding, in the region corresponding to the first side wall 2112, the shell 211 and cover plate 212 can be welded and sealed along an outer edge of the second region 2162 far away from the inside of the battery cell 20. With a large height H3, the second region 2162 is not or hardly affected by the electrode terminal 214 with a relatively small height and also unlikely to affect the electrode terminal 214. In this way, the sealing efficiency can be improved, the sealing reliability can be ensured, and the processing efficiency and safety performance of the battery cell 20 can be improved.

It should be understood that the height H3 of the second region 2162 in this embodiment of this application may be a minimum height of different regions of the second region 2162 along the height direction of the second region 2162. For example, as shown in FIG. 7 and FIG. 8, to facilitate processing and improve processing efficiency, heights H3 of different regions of the second region 2162 may be set to be the same, but the embodiments of this application are not limited thereto.

In this embodiment of this application, unlike the first side wall 2112, the battery cell 20 may further include a wall where no electrode terminal 214 is provided. Specifically, the shell 211 includes a second side wall 2113 adjacent to the opening 2111, where no electrode terminal 214 is provided on the second side wall 2113; and the connecting structure 216 includes a third region 2163 corresponding to the second side wall 2113, where height of the third region 2163 protruding from the outer surface of the second side wall 2113 is not equal to height of the first region 2161 protruding from the outer surface of the first side wall 2112. An outer surface of the second side wall 2113 in this embodiment of this application is a surface of the second side wall 2113 far away from the inside of the battery cell 20. As the second side wall 2113 is provided with no electrode terminal 214, it can be set that a protruding height of the third region 2163 corresponding to the second side wall 2113 is not equal to the height H1 of the first region 2161 protruding from the outer surface of the first side wall 2112, in other words, different regions of the connecting structure 216 of the battery cell 20 can have different heights. In this way, in the arrangement of the third region 2163, there is no need to consider the influence of electrode terminals 214. For example, if the third region 2163 does not need to avoid other components, the height of the third region 2163 protruding from the outer surface of the second side wall 2113 can be reduced to reduce the space occupied by the third region 2163. On the contrary, if the third region 2163 needs to avoid other components, the height of the third region 2163 protruding from the outer surface of the second side wall 2113 can be appropriately increased or reduced so as to avoid the influence of other components on the connecting structure 216, thereby improving the sealing reliability between the shell 211 and the cover plate 212.

Optionally, the height of the third region 2163 protruding from the outer surface of the second side wall 2113 is less than the height of the first region 2161 protruding from the outer surface of the first side wall 2112. Considering that except the electrode terminals 214, no other components with a larger height or components that have an influence on the sealing connection between the shell 211 and the cover plate 212 are provided on a side wall of the shell 211, height of the side wall of the shell 211 with no electrode terminal 214 can be set to be relatively small.

Specifically, the battery cell 20 may have at least one wall where no electrode terminal 214 is provided, in other words, the battery cell 20 may have at least one second side wall 2113. For example, in FIG. 7 and FIG. 8, the battery cell 20 includes one first side wall 2112 and three second side walls 2113, to be specific, the connecting structure 216 includes a second region 2162 corresponding to the first side wall 2112 and three third regions 2163 corresponding to the three second side walls 2113. As shown in FIG. 7 and FIG. 8, the height of the second region 2162 of the connecting structure 216 protruding from the outer surface of the first side wall 2112 is H3; height of the third region 2163 on the left side of the connecting structure 216 protruding from the corresponding second side wall 2113 is H4; height of the third region 2163 below the connecting structure 216 protruding from the corresponding second side wall 2113 is H5; and height of the third region 2163 on the right side of the connecting structure 216 protruding from the corresponding second side wall 2113 is H5. Heights H3 to H6 can be set according to the actual application, and some heights can be set to be equal or all heights are not equal. For example, the heights H3 to H6 can be set to be all unequal to adapt to different side walls of the shell 211. For another example, the height H4 can be set to be equal to the height H6, but the height H3, the height H4, and the height H5 are not equal, such that the connecting structure 216 is a symmetrical structure for convenience of processing. For another example, the heights H4 to H6 can be set to be equal but different from and less than the height H3, so as to improve the processing efficiency of the battery cell 20, reduce the space occupation rate of the connecting structure 216, and increase the energy density of the battery 10.

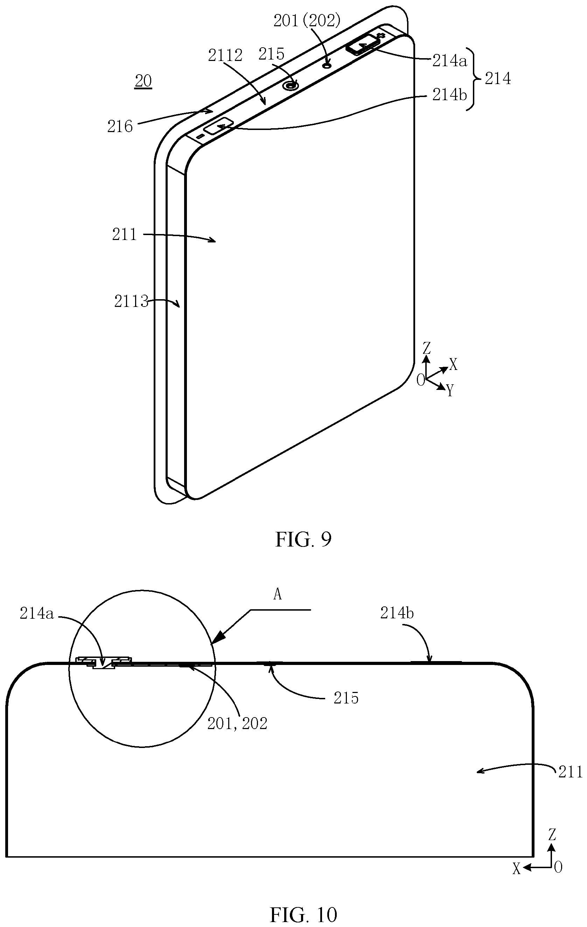

Optionally, the different connecting structures 216 of different battery cells 20 in the embodiments of this application can be obtained through cutting. For example, FIG. 9 is a schematic structural diagram of the battery cell 20 before cutting according to an embodiment of this application. As shown in FIG. 9, before the battery cell 20 is cut, to be specific, after the cover plate 212 is attached to the shell 211 but before the shell 211 and the cover plate 212 are sealed, the height of the connecting structure 216, between the shell 211 and the cover plate 212, protruding from the side wall of the shell 211 can be set to be larger. After that, the battery cell 20 shown in FIG. 9 can be cut, that is, the connecting structure 216 can be cut to obtain different connecting structures 216 of battery cells 20 as shown in FIG. 3 to FIG. 8. Then, the connecting structure 216 can be sealingly connected along an outer edge of the connecting structure 216 far away from the battery cell 20, for example, through welding, so as to seal the shell 211 and the cover plate 212 to obtain a processed battery cell 20.

Optionally, the housing 21 of this embodiment of this application may further be provided with other components. For example, the housing 21 may further be provided with an electrolyte injection hole 2151 and a sealing assembly 215 for sealing the electrolyte injection hole 2151. For example, as shown in FIG. 3 to FIG. 9, the first side wall 2112 or the second side wall 2113 of the battery cell 20 may be provided with an electrolyte injection hole 2151 and a sealing assembly 215 for sealing the electrolyte injection hole 2151, where the electrolyte injection hole 2151 is configured for injecting an electrolyte into the battery cell 20, and the sealing assembly 215 seals the electrolyte injection hole 2151 through, for example, laser welding, so as to improve the sealing reliability.

The connecting structure 216 of this embodiment of this application is described above with reference to the accompanying drawings, and other portions of the battery cell 20 of this embodiment of this application are described below with reference to the accompanying drawings.

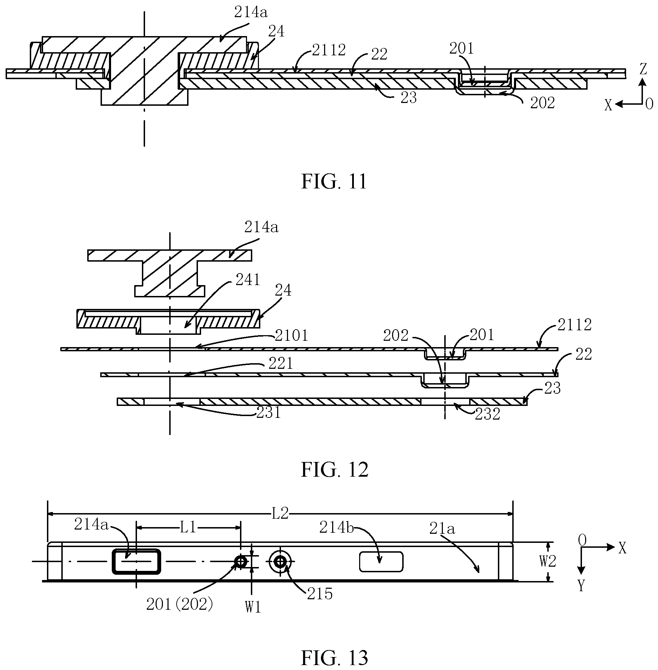

FIG. 10 is a schematic partial cross-sectional exploded view of the battery cell 20 according to an embodiment of this application. Specifically, FIG. 10 may be a schematic partial cross-sectional view of the shell 211 of the battery cell 20, where the cross section is perpendicular to the thickness direction Y of the battery cell 20; and the battery cell 20 shown in FIG. 10 may be any of the battery cells 20 shown in FIG. 3 to FIG. 9. FIG. 11 is a schematic partial enlarged cross-sectional view of the battery cell 20 according to an embodiment of this application, for example, FIG. 11 is an enlarged view of region A shown in FIG. 10. FIG. 12 is a schematic partial exploded cross-sectional view of the battery cell 20 according to an embodiment of this application, for example, FIG. 12 is a schematic structural exploded view of the battery cell 20 shown in FIG. 11.

As shown in FIG. 10 to FIG. 12, the battery cell 20 further includes an insulation structure 22, where the insulation structure 22 is arranged on a side of the first side wall 2112 facing the inside of the battery cell 20, where the first side wall 2112 is provided with a first through hole 2101, the insulation structure 22 is provided with a second through hole 221 corresponding to the first through hole 2101, and the electrode terminal 214 runs through the first through hole 2101 and the second through hole 221, such that the first side wall 2112 and the insulation structure 22 are riveted.

The insulation structure 22 of this embodiment of this application is provided on a side of the first side wall 2112 facing the inside of the battery cell 20, to be specific, the insulation structure 22 and the first side wall 2112 are stacked along the thickness direction of the first side wall 2112. Moreover, the specific shape of the insulation structure 22 can be designed according to the actual application. For example, the insulation structure 22 can be plate-shaped so as to be attached to the first side wall 2112, such that the first side wall 2112 is electrically isolated from components inside the battery cell 20. For example, the insulation structure 22 can be configured to electrically isolate the first side wall 2112 from the electrode assembly inside the battery cell 20 so as to avoid short circuit.

Optionally, the arrangement form of the electrode terminal 214 of this embodiment of this application can be flexibly selected according to the actual application. For example, the first side wall 2112 is provided with a first through hole 2101, and the insulation structure 22 is provided with a second through hole 221 corresponding to the first through hole 2101. The electrode terminal 214 runs through the first through hole 2101 and the second through hole 221, such that the first side wall 2112 and the insulation structure 22 are riveted, which facilitates processing and fixation of the electrode terminal 214, the first side wall 2112, and the insulation structure 22.

It should be understood that as the housing 21 of the battery cell 20 is typically made of metal, if the electrode terminal 214 is in direct contact with the first side wall 2112, a short circuit may occur. Therefore, an insulation member may be provided between the electrode terminal 214 and the first side wall 2112 so as to avoid short circuit. Specifically, the battery cell 20 further includes a sealing structure 24 arranged on a side of the first side wall 2112 far away from the inside of the battery cell 20, where the sealing structure 24 is configured to electrically isolate the electrode terminal 214 from the first side wall 2112. The sealing structure 24 is typically made of an insulating material, and the sealing structure 24 is arranged between the first side wall 2112 and the electrode terminal 214, such that the short circuit between the electrode terminal 214 and the first side wall 2112 can be avoided.

Optionally, the sealing structure 24 is provided with a fifth through hole 241, where the fifth through hole 241 is at least partially accommodated in the first through hole 2101, and the electrode terminal 214 runs through the fifth through hole 241, such that the electrode terminal 214 and the first through hole 2101 are sealed.

The sealing structure 24 is provided with a fifth through hole 241, where a hole wall forming the fifth through hole 241 is at least partially located in the first through hole 2101; or further, a hole wall of the fifth through hole 241 can be at least partially located in the second through hole 221, such that a portion of the sealing structure 24 is provided between the electrode terminal 214 and the first through hole 2101 under the condition that the electrode terminal 214 runs through the fifth through hole 241, so as to avoid short circuit; or further, a portion of the sealing structure 24 may be provided between the electrode terminal 214 and the second through hole 221. In this way, as the first side wall 2112 is provided with the first through hole 2101 and the insulation structure 22 is provided with the second through hole 221, there may be gaps between the electrode terminal 214 and the first through hole 2101 and between the electrode terminal 214 and the second through hole 221, so the first through hole 2101 and the second through hole 221 can be sealed by the sealing structure 24. For example, during riveting and extrusion, the sealing structure 24 can be extruded to deform and then sealed, so as to avoid internal electrolyte leakage.

It should be understood that the electrode terminal 214 of this embodiment of this application runs through the sealing structure 24, the first side wall 2112, and the insulation structure 22 in sequence. However, although the riveting function of the electrode terminal 214 can limit relative translation between the first side wall 2112 and the insulation structure 22, it cannot prevent the relative rotation between the first side wall 2112 and the insulation structure 22. Therefore, a limiting structure can be provided to further limit the misalignment between the first side wall 2112 and the insulation structure 22. Specifically, a first limiting structure 201 is provided on the first side wall 2112, and the insulation structure 22 is provided with a second limiting structure 202 corresponding to the first limiting structure 201, such that the second limiting structure 202 and the first limiting structure 201 cooperate with each other to prevent relative movement between the insulation structure 22 and the first side wall 2112. This can position the first side wall 2112 and the insulation structure 22 so as to facilitate the installation thereof. In addition, this can also avoid misalignment between the first side wall 2112 and the insulation structure 22, for example, it can avoid relative translation between the first side wall 2112 and the insulation structure 22, thereby ensuring the insulation performance of the insulation structure 22 between the first side wall 2112 and other components inside the battery cell 20, avoiding short circuit, and improving the safety performance of the battery cell 20.

It should be understood that the cooperation mode of the first limiting structure 201 and the second limiting structure 202 in this embodiment of this application can be flexibly set according to the actual application. Examples are given below with reference to the accompanying drawings.

Optionally, in an embodiment, the first limiting structure 201 includes a first bump structure protruding toward the insulation structure 22 relative to the first side wall 2112, and the second limiting structure 202 includes a first groove structure with an opening facing the first side wall 2112, where the first bump structure is at least partially accommodated in the first groove structure. Specifically, as shown in FIG. 10 to FIG. 12, a first bump structure protruding toward the insulation structure 22 is provided on a surface of the first side wall 2112 facing the insulation structure 22, and correspondingly, a first groove structure is provided on a surface of the insulation structure 22 facing the first side wall 2112, where an opening of the first groove structure faces the first side wall 2112. Moreover, the first limiting structure 201 includes the first bump structure and the second limiting structure 202 includes the first groove structure, such that the mutual cooperation between the first limiting structure 201 and the second limiting structure 202 can include that the first bump structure is at least partially accommodated in the first groove structure. In this way, the first groove structure can limit the movement of the first bump structure, and in turn limit the movement of the first side wall 2112 relative to the insulation structure 22, so as to achieve the functions of positioning and fixing and avoid misalignment between the first side wall 2112 and the insulation structure 22. In addition, the foregoing arrangement form is simple and the structure is stable, which is easy to process.

Optionally, in another embodiment, the first limiting structure 201 includes a second groove structure with an opening facing the insulation structure 22, where the second limiting structure 202 includes a second bump structure protruding toward the first side wall 2112 relative to the insulation structure 22, and the second bump structure is at least partially accommodated in the second groove structure. Specifically, in a direction opposite to the arrangement direction shown in FIG. 10 to FIG. 12, a second groove structure is provided on the surface of the first side wall 2112 facing the insulation structure 22, where an opening of the second groove structure faces the insulation structure 22; and correspondingly, a second bump structure protruding toward the first side wall 2112 is provided on the surface of the insulation structure 22 facing the first side wall 2112. Moreover, the first limiting structure 201 may include the second groove structure, and the second limiting structure 202 may include the second bump structure, such that the mutual cooperation between the first limiting structure 201 and the second limiting structure 202 can include that the second bump structure is at least partially accommodated in the second groove structure. In this way, the second groove structure can limit the movement of the second bump structure, and in turn limit the movement of the insulation structure 22 relative to the first side wall 2112, so as to achieve the functions of positioning and fixing, thereby avoiding misalignment between the first side wall 2112 and the insulation structure 22. In addition, the foregoing arrangement form is simple and the structure is stable, which facilitates processing.

Optionally, the first limiting structure 201 of this embodiment of this application may include at least one first bump structure and/or at least one second groove structure, and correspondingly, the second limiting structure 202 may include at least one first groove structure and/or at least one second bump structure. The embodiments of this application are not limited thereto. For example, to reduce the space occupied by the first limiting structure 201 on the first side wall 2112 and the space occupied by the second limiting structure 202 on the insulation structure 22, the first limiting structure 201 may include the first bump structure or the second groove structure arranged on the first side wall 2112, and correspondingly, the second limiting structure 202 may include the first groove structure or the second bump structure arranged on the insulation structure 22, so as to facilitate processing.

Optionally, the arrangement form of the first bump structure, the first groove structure, the second bump structure, and the second groove structure in this embodiment of this application can be flexibly selected according to the actual application, so as to improve the processing efficiency of the battery cell 20.

For example, the first bump structure and the second bump structure can be realized in a groove form. The first bump structure is a groove of the first side wall 2112 that is recessed toward the insulation structure 22 and that protrudes from the inner surface of the first side wall 2112; and/or the second bump structure is a groove of the insulation structure 22 that is recessed toward the first side wall 2112 and that protrudes from the outer surface of the insulation structure 22. Specifically, as shown in FIG. 10 to FIG. 12, the first side wall 2112 is recessed toward the insulation structure 22 to form a groove, the bottom wall of the groove protrudes from the inner surface of the first side wall 2112, where the inner surface of the first side wall 2112 is a surface facing the inside of the battery cell 20, and the groove can serve as the first bump structure. Similarly, in a direction opposite to the arrangement direction shown in FIG. 10 to FIG. 12, the insulation structure 22 is recessed toward the first side wall 2112 to form a groove, and the bottom wall of the groove protrudes from the outer surface of the insulation structure 22, where the outer surface of the insulation structure 22 is a surface far away from the inside of the battery cell 20, such that the groove can serve as the second bump structure. Compared with a manner of directly arranging a solid bump structure on a surface of the first side wall 2112 or on a surface of the insulation structure 22, a manner of arranging the first bump structure and/or the second bump structure as a groove can effectively reduce weight of the first side wall 2112 and/or the insulation structure 22, and the processing method is simple. For example, the first bump structure and the first groove structure can be processed synchronously by punching, or the second bump structure and the second groove structure can be processed synchronously by punching, which improves the processing efficiency of the battery cell 20.

Optionally, the first groove structure and the second groove structure can also be arranged with reference to the first bump structure and the second bump structure, respectively. The first groove structure protrudes from the inner surface of the insulation structure 22; and/or the second groove structure protrudes from the outer surface of the first side wall 2112. The first groove structure of the insulation structure 22 is arranged to protrude from the inner surface of the insulation structure 22, where the inner surface of the insulation structure 22 is a surface facing the inside of the battery cell 20, so depth of the first groove structure is slightly limited by the thickness of the insulation structure 22. However, although the thickness of the insulation structure 22 is limited, the depth of the first groove structure may be greater than the thickness of the insulation structure 22. In this way, more portions of the first bump structure can be accommodated in the first groove structure, so as to improve the stability of the first bump structure and the first groove structure, thereby improving the stability between the first limiting structure 201 and the second limiting structure 202. Similarly, the second groove structure of the first side wall 2112 is arranged to protrude from the outer surface of the first side wall 2112, where the outer surface of the first side wall 2112 is a surface far away from the inside of the battery cell 20, and depth of the second groove structure is slightly limited by the thickness of the first side wall 2112. However, although the thickness of the first side wall 2112 is limited, the depth of the second groove structure may be greater than thickness of the first side wall 2112. In this way, more portions of the second bump structure can be accommodated in the second groove structure, so as to improve the stability between the second bump structure and the second groove structure, thereby improving the stability of the first limiting structure 201 and the second limiting structure 202.

It should be understood that if the first bump structure and the second bump structure are grooves, thickness of the bottom wall of the groove may be less than or equal to or slightly greater than the thickness of the first side wall 2112 where the groove is located or the thickness of the insulation structure 22 where the groove is located. Alternatively, in contrast, the first bump structure may alternatively be a bump with a larger thickness on the first side wall 2112. For example, thickness of the first bump structure is greater than thicknesses of other regions of the first side wall 2112, such that the first bump structure protrudes from the surface of the first side wall 2112 facing the insulation structure 22. Similarly, the second bump structure may alternatively be a bump with a larger thickness on the insulation structure 22. For example, thickness of the second bump structure is greater than thicknesses of other regions of the insulation structure 22, such that the second bump structure protrudes from the surface of the insulation structure 22 facing the first side wall 2112.

Optionally, under a condition that the first bump structure is a bump with a larger thickness, the first bump structure can be integrated with the first side wall 2112. For example, the first bump structure can be formed on the first side wall 2112 through punching, milling, and the like. Alternatively, the first bump structure may be separated from the first side wall 2112. For example, the first side wall 2112 is provided with a through hole, the first bump structure is installed in the through hole, and the installation methods may include welding, riveting, clamping, and the like, which are not particularly limited in this application. Similar to the first bump structure, the second bump structure can also be integrated with or separated from the insulation structure 22 under the condition that the second bump structure is a bump with a larger thickness, which is not particularly limited in this application.

Optionally, the battery cell 20 further includes a connecting member 23 configured to be electrically connected to the electrode terminal 214, where the connecting member 23 is arranged on a side of the insulation structure 22 facing the inside of the battery cell 20, the connecting member 23 is provided with a third through hole 231 corresponding to the second through hole 221, and the electrode terminal 214 runs through the third through hole 231, such that the connecting member 23, the insulation structure 22, and the first side wall 2112 are riveted. Specifically, as shown in FIG. 10 to FIG. 12, the connecting member 23 of this embodiment of this application can be configured to be electrically connected to the electrode terminal 214 and also can be configured to be electrically connected to a tab of the electrode assembly, such that the electrode terminal 214 is electrically connected to the tab. The connecting member 23 is provided with a third through hole 231, and the first through hole 2101 of the first side wall 2112, the second through hole 221 of the insulation structure 22, and the third through hole 231 of the connecting member 23 are stacked in sequence, such that the electrode terminal 214 can run through the first through hole 2101, the second through hole 221, and the third through hole 231 in sequence, thereby realizing riveting fixation between the first side wall 2112, the insulation structure 22, and the connecting member 23, with a simple processing process, which helps improve the processing efficiency of the battery cells 20.

Optionally, the electrode terminal 214 and the connecting member 23 can be connected through welding, so as to further improve the connection stability between the electrode terminal 214 and the connecting member 23 and ensure the performance of the battery cell 20.

Optionally, the connecting member 23 further includes a third limiting structure 232, where the third limiting structure 232 and the second limiting structure 202 cooperate with each other to prevent relative movement between the connecting member 23 and the insulation structure 22. Specifically, the third limiting mechanism 232 of the connecting member 23 and the second limiting structure 202 can cooperate with each other, to be specific, the first limiting structure 201, the second limiting structure 202, and the third limiting structure 232 can cooperate with each other to prevent relative movement between the first side wall 2112, the insulation structure 22, and the connecting member 23, the connecting member 23 can be fixed to facilitate the assembly of the battery cells 20, and it can also ensure that the insulation structure 22 electrically isolates the first side wall 2112 from the connecting member 23, so as to avoid short circuit between the connecting member 23 and the first side wall 2112.

Optionally, the third limiting structure 232 can be flexibly arranged according to the actual application, for example, the third limiting structure 232 can be correspondingly arranged according to the arrangement forms of the first limiting structure 201 and the second limiting structure 202. For example, if the first limiting structure 201 includes the first bump structure and the second limiting structure 202 includes the first groove structure, the first groove can protrude from the surface of the insulation result 22 toward the connecting member 23, and correspondingly, the third limiting structure 232 can include a groove or a through hole that is provided at the connecting member 23 and that has an opening facing the insulation structure 22 to accommodate at least part of the first groove structure, so as to realize mutual cooperation between the third limiting structure 232 and the second limiting structure 202.

In an example shown in FIG. 10 to FIG. 12, corresponding to the first limiting structure 201 and the second limiting structure 202, the third limiting structure 232 includes a fourth through hole of the connecting member 23, where the fourth through hole is configured to accommodate at least part of the second limiting structure 202. Specifically, the first limiting structure 201 may include the first bump structure of the first side wall 2112, the second limiting structure 202 may include the first groove structure of the insulation structure 22, and the first groove structure protrudes from the surface of the insulation structure 22 facing the inside of the battery cell 20. Therefore, under a condition that the first groove structure can accommodate at least part of the first bump structure, the third limiting structure 232 may include a fourth through hole for accommodating at least part of the first groove structure. In this way, as compared with the condition where the third limiting structure 232 is arranged as a groove, the fourth through hole can save the space occupied by the bottom wall of the groove, improving the utilization of space inside the battery cell 20, reducing the weight of the connecting member 23, and in turn reducing the weight of the battery cell 20, thereby improving the performance of the battery cell 20. In addition, the first groove structure of the insulation structure 22 is arranged between the inner wall of the fourth through hole and the first bump structure, which can also avoid the short circuit between the connecting member 23 and the first side wall 2112.

For another example, if the first limiting structure 201 includes the second groove structure, the second limiting structure 202 includes the second bump structure, and the second bump structure is a groove provided on the insulation structure 22, the third limiting structure 232 may include a third bump structure protruding toward the insulation structure 22, where the third bump structure is at least partially accommodated in the second bump structure, so as to realize the mutual cooperation between the third limiting structure 232 and the second limiting structure 202.

It should be understood that the arrangement positions and sizes of the first limiting structure 201 and the second limiting structure 202 in this embodiment of this application can be flexibly set according to the actual application. For example, the size and position of the first limiting structure 201 can be set according to the size of the first side wall 2112, while the size and position of the second limiting structure 202 are related to the size and position of the first limiting structure 202, such that the first limiting structure 201 and the second limiting structure 202 can cooperate with each other. The following uses the first side wall 2112 and the first limiting structure 201 as examples for description.

FIG. 13 is a schematic diagram of the outer surface of the first side wall 2112 of the battery cell 20 according to an embodiment of this application, where the outer surface of the first side wall 2112 is a surface of the first side wall 2112 far away from the inside of the battery cell 20. As shown in FIG. 13, along the length direction X of the first side wall 2112, a ratio L1/L2 of a distance L1 between the electrode terminal 214 and the first limiting structure 201 to the length L2 of the first side wall 2112 falls in a range of [10%, 48%]. If the value of L1/L2 is set too large, in the length direction X of the first side wall 2112, the distance L1 between the first limiting structure 201 and the electrode terminal 214 is too large. As a result, the excessively large distance between the first limiting structure 201 and the electrode terminal 214 makes the first limiting structure 201 fail to effectively limit the relative movement between the first side wall 2112 and the insulation structure 22 during the installation of the electrode terminal 214, and thus affects the processing efficiency of the battery cell 20. On the contrary, if the value of L1/L2 is set too small, the distance L1 between the first limiting structure 201 and the electrode terminal 214 is too small. As a result, the excessively small distance between the first limiting structure 201 and the electrode terminal 214 probably affects the installation of the electrode terminal 214. For example, the first side wall 2112 is provided with a first through hole 2101 for accommodating at least part of the electrode terminal 214. If the distance L1 between the first limiting structure 201 and the electrode terminal 214 is too small, the distance between the first limiting structure 201 and the first through hole 2101 is also too small. As a result, the first limiting structure 201 and the first through hole 2101 may affect each other, which in turn affects the structural strength and stability of the first side wall 2112, thereby reducing the installation efficiency of the battery cell 20 and increasing the processing difficulty.

Therefore, the value of L1/L2 should not be set too large or too small. For example, the value of L1/L2 may be in a range of [10%, 48%] or in a range of [20%, 40%]. Alternatively, the value of L1/L2 may be set to 10%, 15%, 20%, 25%, 30%, 35%, 40%, or 45%.

It should be understood that, as shown in FIG. 13, the distance L1 between the electrode terminal 214 and the first limiting structure 201 in this embodiment of this application can also represent a distance between the center of the electrode terminal 214 and the center of the first limiting structure 201 along the length direction X of the first side wall 2112. In addition, in the distance L1 between the electrode terminal 214 and the first limiting structure 201, the electrode terminal 214 may represent any electrode terminal 214 on the first side wall 2112. For example, L1 may be the distance between the first limiting structure 201 and the electrode terminal 214 closest to the first limiting structure 201. As shown in FIG. 13, if the electrode terminal 214 closest to the first limiting structure 201 is a positive electrode terminal 214a, L1 is the distance between the first limiting structure 201 and the positive electrode terminal 214a, but the embodiments of this application are not limited thereto.

Optionally, along a width direction Y of the first side wall 2112, a ratio W1/W2 of the size W1 of the first limiting structure 201 to the width W2 of the first side wall 2112 falls in a range of [15%, 95%]. If the value of W1/W2 is too large, the size W1 of the first limiting structure 201 in the width direction Y of the first side wall 2112 is too large, which increases the processing difficulty of the first limiting structure 201, and the first limiting structure 201 is likely to affect other walls intersecting with the first side wall 2112. On the contrary, if the value of W1/W2 is too small, the size W1 of the first limiting structure 201 in the width direction Y of the first side wall 2112 is too small. Because the width W2 of the first side wall 2112 is limited, the small size of the first limiting structure 201 increases the processing difficulty of the first limiting structure 201, and it is also difficult for the first limiting structure 201 with a small size to limit the relative movement between the first side wall 2112 and the insulation structure 22.

Therefore, the value of W1/W2 should not be set too large or too small. For example, the value of W1/W2 may be in a range of [15%, 95%] or in a range of [20%, 40%]. Alternatively, the value of W1/W2 may be set to 15%, 20%, 25%, 30%, 35%, 40%, 45%, 50%, 55%, 60%, 65%, 70%, 75%, 80%, 85%, 90%, or 95%.

It should be understood that the length direction X of the first side wall 2112 in this embodiment of this application is perpendicular to the width direction Y, the length L2 of the first side wall 2112 represents the size of the first side wall 2112 in the length direction X, the width W2 of the first side wall 2112 represents the size of the first side wall 2112 in the width direction Y, and the length L2 of the first side wall 2112 is greater than the width W2 of the first side wall 2112.

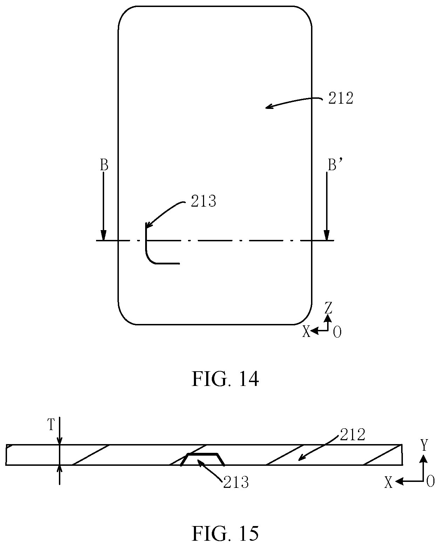

FIG. 14 is a schematic diagram of the outer surface of the cover plate 212 according to an embodiment of this application, where the outer surface of the cover plate 212 is a surface far away from the inside of the battery cell 20. The cover plate 212 shown in FIG. 13 may be the cover plate 212 of the battery cell 20 shown in FIG. 7 and FIG. 8, but the related description is also applicable to the cover plate 212 of the battery cell 20 shown in FIG. 3 to FIG. 6. For brevity, details are not repeated herein. FIG. 15 is a schematic partial cross-sectional view of the cover plate 212 according to an embodiment of this application. For example, the schematic cross-sectional view may be a schematic partial cross-sectional view along direction B-B' shown in FIG. 14.

Optionally, the shell 211 of this embodiment of this application may have various shapes, such as a cylinder, a cuboid, or other polyhedrons. Illustratively, in this embodiment of this application, the shell 211 being a cuboid structure is used as an example for description. Correspondingly, the cover plate 212 of this embodiment of this application is a component configured to cover the opening 2111 of the shell 211 to isolate the internal environment of the battery cell 20 from the external environment. The cover plate 212 may match the shell 211 in shape. For example, as shown in FIG. 14 and FIG. 15, the shell 211 is a cuboid structure, and the cover plate 212 is a rectangular plate structure that matches the shell 211.

In the battery cell 20, the internal space formed by the shell 211 and the cover plate 212 can be used to accommodate the electrode terminal, and the electrode assembly is a component in the battery cell 20 where electrochemical reaction takes place. Specifically, the electrode assembly may include a tab and an electrode main body. The tab of the electrode assembly may include a positive electrode tab and a negative electrode tab. The positive electrode tab may be formed by stacking portions of the positive electrode plate coated with no positive electrode active substance layer, and the negative electrode tab may be formed by stacking portions of the negative electrode plate coated with no negative electrode active substance layer. The electrode main body may be formed by stacking or winding portions of the positive electrode plate coated with a positive electrode active substance layer and portions of the negative electrode plate coated with a negative electrode active substance layer.

It should be understood that one or more electrode assemblies 21 may be provided in the shell 211 depending on actual use demands. The electrode assembly may be cylindrical, cuboid, or the like. If the electrode assembly is a cylindrical structure, the shell 211 may also be a cylindrical structure. If the electrode assembly is a cuboid structure, the shell 211 may also be a cuboid structure.

Optionally, the cover plate 212 of this embodiment of this application may be any wall of the battery cell 20, for example, the cover plate 212 is a wall with a largest area of the battery cell 20, which facilitates the installation of components inside the battery cell 20, for example, can facilitate the installation of the electrode assembly and accelerate the processing of the battery cell 20.

Optionally, the material of the housing 21 of this embodiment of this application can be flexibly set according to the actual application, and the material of the cover plate 212 and the material of the shell 211 can be the same or different. For example, the shell 211 is made of stainless steel and/or alloy; and/or the cover plate 212 is made of stainless steel and/or alloy, such that the shell 211 and the cover plate 212 have high hardness and ensure the structural strength of the battery cell 20. For another example, in this embodiment of this application, the shell 211 may be made of various materials, such as copper, iron, aluminum, steel, and aluminum alloy. The cover plate 212 may also be made of various materials, such as copper, iron, aluminum, steel, and aluminum alloy.

Optionally, thickness of the housing 21 of this embodiment of this application can be flexibly set according to the actual application, and thicknesses of different walls of the housing 21 may be the same or different, for example, the thickness of the cover plate 212 and the thickness of the shell 211 may be the same or different; and thicknesses of different walls of the shell 211 may be the same or different. For example, as shown in FIG. 14 and FIG. 15, taking the cover plate 212 as an example, the thickness T of the cover plate 212 falls in a range of [50 µm, 200 µm], so as to ensure the structural strength of the battery cell 20. For example, the thickness T of the cover plate 212 may be set to 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm. Similarly, thickness of any wall of the shell 211 falls in the range of [50 µm, 200 µm], so as to ensure the structural strength of the battery cell 20. For example, the thickness T of any wall of the shell 211 may be set to 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or 200 µm.

Optionally, the housing 21 of the battery cell 20 of this embodiment of this application may be further provided with a pressure relief mechanism 213. For example, as shown in FIG. 14 and FIG. 15, a pressure relief mechanism 213 is provided on the cover plate 212; or unlike FIG. 14 and FIG. 15, the pressure relief mechanism 213 may be provided on a wall opposite the cover plate 212; or the pressure relief mechanism may be provided on another wall. The pressure relief mechanism 213 of this embodiment of this application is configured to be actuated to relieve internal pressure or temperature of the battery cell 20 when the internal pressure or temperature of the battery cell 20 reaches a preset threshold.

The preset threshold may be adjusted according to different design requirements. The preset threshold may depend on the material used for one or more of the positive electrode plate, negative electrode plate, electrolyte, and separator in the battery cell 20. "Actuation" mentioned in this application means that the pressure relief mechanism 213 is put into action such that the internal pressure and temperature of the battery cell 20 are relieved. The action that the pressure relief mechanism 213 is put into may include but is not limited to, for example, cracking, tearing, or melting at least part of the pressure relief mechanism 213. When the pressure relief mechanism 213 is actuated, high-pressure and high-temperature substances inside the battery cell 20 are discharged from the pressure relief mechanism 213 as emissions. In this way, the battery cell 20 can release its pressure under a condition of controllable pressure or temperature, thereby avoiding more serious potential accidents.

The emissions from the battery cell 20 mentioned in this application include but are not limited to: electrolyte, fragments of positive and negative electrode plates and separator that are dissolved or disrupted, and high-temperature and high-pressure gases and flames produced by reactions.

The pressure relief mechanism 213 in the battery cell 20 greatly influences the safety of the battery. For example, when the battery cell 20 is short-circuited or overcharged, thermal runaway may be caused inside the battery cell 20, resulting in a sudden rise in pressure or temperature. In this case, the pressure relief mechanism 213 can be actuated to release the internal pressure and temperature to the outside, thus preventing the battery cell 20 from exploding and catching fire.

Optionally, the pressure relief mechanism 213 of this embodiment of this application can be arranged on any wall of the housing 21 of the battery cell 20. For example, in this embodiment of this application, the pressure relief mechanism 213 being arranged on the cover plate 212 is used as an example, but the related description is also applicable to the condition where the pressure relief mechanism 213 is located on other walls. In addition, the pressure relief mechanism 213 may be a portion of the cover plate 212, or may be a structure separated from the cover plate 212 and be fixed to the cover plate 212 through, for example, welding.

For example, the pressure relief mechanism 213 and the cover plate 212 may alternatively be separated structures. The pressure relief mechanism 213 may be in a form of an explosion-proof valve, a gas valve, a pressure relief valve, a safety valve, or the like, and may specifically use a pressure-sensitive or temperature-sensitive element or structure. To be specific, when the internal pressure or temperature of the battery cell 20 reaches the preset threshold, the pressure relief mechanism 213 performs an action or a weak structure provided in the pressure relief mechanism 213 is damaged, to form an opening or a channel for releasing the internal pressure or temperature.

For another example, when the pressure relief mechanism 213 is a portion of the cover plate 212. For example, the pressure relief mechanism 213 may be formed by providing an indentation on the cover plate 212, to be specific, the pressure relief mechanism 213 is an indentation of the cover plate 212, and thickness of a region where the indentation is located is less than thicknesses of other regions of the cover plate 212 except for the indentation. The indentation is the weakest position of the pressure relief mechanism 213. When the gas generated by the battery cell 20 is too much, the internal pressure of the shell 211 increases and reaches the threshold or the internal temperature of the battery cell 20 increases and reaches the threshold due to the heat generated by the reaction inside the battery cell 20, the pressure relief mechanism 213 may crack at the indentation and cause the inside and outside of the shell 211 to be communicated, and the gas pressure and temperature are released to the outside through the cracking of the pressure relief mechanism 213, thereby avoiding the explosion of the battery cell 20.

For example, as shown in FIG. 14 and FIG. 15, the pressure relief mechanism 213 is an L-shaped indentation provided on the outer surface of the battery cell 20. For example, if the pressure relief mechanism 213 is located on the cover plate 212, the pressure relief mechanism 213 is an L-shaped indentation on the surface of the cover plate 212 far away from the inside of the battery cell 20, to be specific, the pressure relief mechanism 213 has two parts connected and perpendicular to each other. In this way, when the temperature or pressure inside the battery cell 20 reaches a preset threshold, the pressure relief mechanism 213 can be destroyed in any direction, such that the pressure relief mechanism 213 is destroyed in a timely manner, and the pressure and temperature inside the battery cell 20 can be released in time to prevent the battery cell 20 from exploding. In addition, the pressure relief mechanism 213 is arranged on the outer surface of the cover plate 212, so as to prevent the electrolyte in the battery cell 20 from accumulating in the indentation and avoid the corrosion of the electrolyte to the pressure relief mechanism 213, thereby improving the safety of the pressure relief mechanism 213.

Optionally, as shown in FIG. 15, when the pressure relief mechanism 213 of this embodiment of this application is an indentation, the cross section of the indentation can be an isosceles trapezoid, which facilitates processing, and can also avoid stress concentration compared with a rectangular cross section, thereby improving the stability of the pressure relief mechanism 213 during the normal use of the battery cell 20.

In this embodiment of this application, the shell 211 and the cover plate 212 of the battery cell 20 are sealingly connected to form a connecting structure 216 surrounding an opening of the shell 211. The connecting structure 216 includes a first region 2161 corresponding to the electrode terminal 214 located on the first side wall 2112 of the shell 211, and an orthographic projection of a portion of the electrode terminal 214 protruding from the outer surface of the first side wall 2112 on the connecting structure 216 does not exceed the first region 2161, to be specific, the range of the first region 2161 is greater than or equal to the range of the orthographic projection. In this way, when the shell 211 and the cover plate 212 of the battery cell 20 are sealingly connected, for example, through welding, welding sealing can be performed along an edge of the first region 2161 far away from the inside of the battery cell 20, or along an edge of the first region 2161 far away from the electrode terminal 214. With a large range, the first region 2161 is not or hardly affected by the electrode terminal 214 with a relatively small range and also unlikely to affect the electrode terminal 214. In this way, the sealing efficiency can be improved, the sealing reliability can be ensured, and the processing efficiency and safety performance of the battery cell 20 can be improved.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell (20), **characterized by** comprising:
a shell (211), wherein the shell (211) is a hollow structure with an opening (2111), and an electrode terminal (214) is provided on a first side wall (2112) of the shell (211) adjacent to the opening (2111); and
a cover plate (212) configured to cover the opening (2111), wherein the cover plate (212) and the shell (211) are sealingly connected to form a connecting structure (216) surrounding the opening (2111), the connecting structure (216) comprises a first region (2161) corresponding to the electrode terminal (214), and an orthographic projection of a portion of the electrode terminal (214) protruding from the outer surface of the first side wall (2112) on the connecting structure (216) does not exceed the first region (2161).

2. The battery cell (20) according to claim 1, **characterized in that** height of the first region (2161) protruding from the outer surface of the first side wall (2112) is greater than height of the electrode terminal (214) protruding from the outer surface of the first side wall (2112).

3. The battery cell (20) according to claim 2, **characterized in that** a difference between the height of the first region (2161) protruding from the outer surface of the first side wall (2112) and the height of the electrode terminal (214) protruding from the outer surface of the first side wall (2112) falls in a range of [0.5 mm, 2 mm].

4. The battery cell (20) according to any one of claims 1 to 3, **characterized in that** in a length direction of the first region (2161), length of the first region (2161) is greater than length of the electrode terminal (214), and the length direction is perpendicular to both a thickness direction of the first region (2161) and a height direction of the first region (2161) protruding from the outer surface of the first side wall (2112).

5. The battery cell (20) according to claim 4, **characterized in that** in the length direction of the first region (2161), a minimum distance between an edge of the first region (2161) and the orthographic projection falls in a range of [0.5 mm, 5 mm].

6. The battery cell (20) according to any one of claims 1 to 5, **characterized in that** the first side wall (2112) is provided with a plurality of electrode terminals (214), and the connecting structure (216) comprises a plurality of first regions (2161) in a one-to-one correspondence with the plurality of electrode terminals (214).

7. The battery cell (20) according to any one of claims 1 to 5, **characterized in that** the connecting structure (216) comprises a second region (2162) corresponding to the first side wall (2112), wherein height of the second region (2162) protruding from the outer surface of the first side wall (2112) is greater than height of the electrode terminal (214) protruding from the outer surface of the first side wall (2112), and the second region (2162) comprises the first region (2161).

8. The battery cell (20) according to any one of claims 1 to 7, **characterized in that** the electrode terminal (214) is a positive electrode terminal (214a).

9. The battery cell (20) according to any one of claims 1 to 8, **characterized in that** the shell (211) has a plurality of first side walls (2112).

10. The battery cell (20) according to any one of claims 1 to 9, **characterized in that** the shell (211) comprises a second side wall (2113) adjacent to the opening (2111), wherein no electrode terminal (214) is provided on the second side wall (2113); and the connecting structure (216) comprises a third region (2163) corresponding to the second side wall (2113), wherein height of the third region (2163) protruding from the outer surface of the second side wall (2113) is not equal to height of the first region (2161) protruding from the outer surface of the first side wall (2112).

11. The battery cell (20) according to claim 10, **characterized in that** the height of the third region (2163) protruding from the outer surface of the second side wall (2113) is less than the height of the first region (2161) protruding from the outer surface of the first side wall (2112).

12. The battery cell (20) according to any one of claims 1 to 11, **characterized in that** the battery cell (20) further comprises:
an insulation structure (22), wherein the insulation structure (22) is arranged on a side of the first side wall (2112) facing the inside of the battery cell (20), wherein the first side wall (2112) is provided with a first through hole (2101), the insulation structure (22) is provided with a second through hole (221) corresponding to the first through hole (2101), and the electrode terminal (214) runs through the first through hole (2101) and the second through hole (221), such that the first side wall (2112) and the insulation structure (22) are riveted.

13. The battery cell (20) according to claim 12, **characterized in that** the battery cell (20) further comprises:
a sealing structure (24) arranged on a side of the first side wall (2112) far away from the inside of the battery cell (20), wherein the sealing structure (24) is configured to electrically isolate the electrode terminal (214) from the first side wall (2112).

14. The battery cell (20) according to claim 13, **characterized in that** the sealing structure (24) is provided with a fifth through hole (241), wherein the fifth through hole (241) is at least partially accommodated in the first through hole (2101), and the electrode terminal (214) runs through the fifth through hole (241), such that the electrode terminal (214) and the first through hole (2101) are sealed.

15. The battery cell (20) according to any one of claims 12 to 14, **characterized in that** a first limiting structure (201) is provided on the first side wall (2112), and the insulation structure (22) is provided with a second limiting structure (202) corresponding to the first limiting structure (201), wherein the second limiting structure (202) and the first limiting structure (201) cooperate with each other to prevent relative movement between the insulation structure (22) and the first side wall (2112).

16. The battery cell (20) according to claim 15, **characterized in that** the battery cell (20) further comprises:
a connecting member (23) configured to be electrically connected to the electrode terminal (214), wherein the connecting member (23) is arranged on a side of the insulation structure (22) facing the inside of the battery cell (20), the connecting member (23) is provided with a third through hole (231) corresponding to the second through hole (221), and the electrode terminal (214) runs through the third through hole (231), such that the connecting member (23), the insulation structure (22), and the first side wall (2112) are riveted.

17. The battery cell (20) according to claim 16, **characterized in that** the connecting member (23) further comprises a third limiting structure (232), wherein the third limiting structure (232) and the second limiting structure (202) cooperate with each other to prevent relative movement between the connecting member (23) and the insulation structure (22).

18. The battery cell (20) according to any one of claims 1 to 17, **characterized in that** the cover plate (212) is a wall with a largest area of the battery cell (20).

19. The battery cell (20) according to any one of claims 1 to 18, **characterized in that** a pressure relief mechanism (213) is provided on the cover plate (212); or
a pressure relief mechanism (213) is provided on a wall opposite the cover plate (212).

20. The battery cell (20) according to claim 19, **characterized in that** the pressure relief mechanism (213) is an L-shaped indentation provided on the outer surface of the battery cell (20).

21. The battery cell (20) according to any one of claims 1 to 20, **characterized in that** the shell (211) is made of stainless steel and/or alloy; and/or
the cover plate (212) is made of stainless steel and/or alloy.

22. The battery cell (20) according to any one of claims 1 to 21, **characterized in that** thickness of the shell (211) falls in a range of [50 µm, 200 µm]; and/or
thickness of the cover plate (212) falls in a range of [50 µm, 200 µm].

23. A battery, **characterized by** comprising:
a plurality of battery cells (20) according to any one of claims 1 to 22.

24. An electric device, **characterized by** comprising:
a plurality of battery cells (20) according to any one of claims 1 to 22, wherein the battery cell (20) is configured to supply electrical energy to the electric device.
